# EUROPEAN PATENT APPLICATION

(11) **EP 2 999 108 A1**
(43) Date of publication of application: **23.03.2016**
(21) Application number: 14797760.7
(22) Date of filing: 23.04.2014
(51) Int. Cl.: H02M 7/12, H02J 3/38, H02M 3/00

(54) **POWER CONDITIONER**

(30) Priority: 13.05.2013 JP 2013101055
(71) Applicant: Panasonic Intellectual Property Management Co., Ltd., Osaka-shi, Osaka 540-6207 (JP)
(72) Inventor: TAMURA, Hideki, Osaka-shi, Osaka 540-6207 (JP); KIDERA, Kazunori, Osaka-shi, Osaka 540-6207 (JP); YOSHIZAWA, Jin, Osaka-shi, Osaka 540-6207 (JP)
(74) Representative: Appelt, Christian W.
(86) International application number: PCT/JP2014/002287
(87) International publication number: WO 2014/185015

(57) **Abstract**

A power conditioner includes first and second power conversion portions, a smoothing capacitor, and an auxiliary power supply. The first power conversion portion is connected to a DC system. The second power conversion portion is connected to an AC system. The capacitor is connected between wires of an intermediate bus which connects input/output terminals of the first power conversion portion and the second power conversion portion. The auxiliary power supply receives commercial power and generates an auxiliary charge voltage to be applied to the capacitor. The first power conversion portion converts DC power of the storage battery to a first DC voltage and outputs the first DC voltage to the intermediate bus. The second power conversion portion converts a voltage of the capacitor to an AC voltage and outputs the AC voltage to the AC system. The auxiliary charge voltage is lower than the first DC voltage.

## Description

### TECHNICAL FIELD

This invention generally relates to power conditioners, and specifically relates to a power conditioner configured to perform power conversion between a DC system and an AC system.

### BACKGROUND ART

Conventionally, a power conditioner that is provided between a DC system and an AC system is known, and the power conditioner performs power conversion between the DC system and the AC system.

Such a power conditioner is internally provided with a capacitor for smoothing a DC voltage. When commercial power of the AC system or DC power, such as a storage battery or a solar cell, of the DC system is inputted to the power conditioner at startup, an inrush current flows into the smoothing capacitor and results in stress conceivably being imposed on circuit elements.

There is a power conditioner provided with a so-called soft start circuit in which an impedance element such as a resistor is inserted in series in paths from the AC system and from the DC system such that the inrush current at startup is suppressed, and which is configured so that both ends of the impedance element are short-circuited by a switch after startup. However, because not only the inrush current at startup, but also a load current in normal operation flows through a circuit including the impedance element and the switch for short-circuiting the both ends, a large rated current is necessary, which causes an increase in size and cost.

In view of the above-described problems, a configuration has been proposed in which the smoothing capacitor is pre-charged before startup, and the inrush current at startup is suppressed. Also, a configuration has been proposed in which the inrush current can be suppressed even when the voltage of the commercial power supply changes, by adjusting the charging voltage of the capacitor before startup according to the voltage of the commercial power supply (refer to Patent Documents 1 and 2, for example).

### CITATION LIST

### PATENT LITERATURE

Patent Document 1: JP H8-168101A
Patent Document 2: JP 2010-130741A

### SUMMARY OF INVENTION

### TECHNICAL PROBLEM

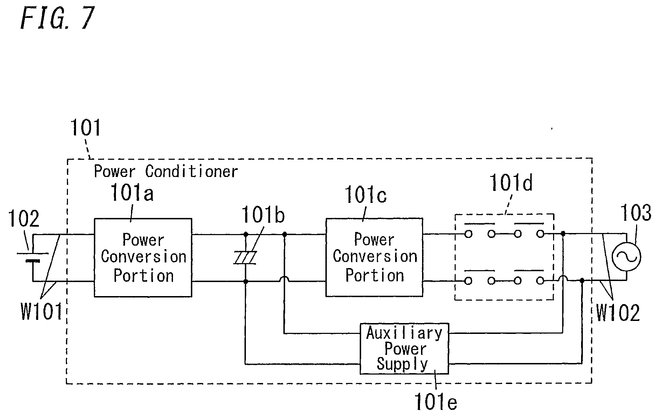

FIG. 7 illustrates a configuration of a conventional power conditioner 101. A DC power supply 102 is connected to a DC system W101, and the DC system W101 is connected to a power conversion portion 101a. The power conversion portion 101a is configured to convert the DC voltage of the DC power supply 102 to a predetermined DC voltage, and output the resultant DC voltage between both ends of a smoothing capacitor 101b. A power conversion portion 101c is configured to convert the DC voltage of the capacitor 101b into an AC voltage, and output the AC voltage to an AC system W102 (commercial power system) via an interconnection relay 101d. The AC system W102 is supplied with commercial power from a commercial power supply 103, and is configured to supply electric power to an unshown load. Here, the power conversion portion 101c has a system interconnection function, and can supply AC electric power that is aligned to the commercial power of the commercial power supply 103 to the AC system W102.

Also, the power conversion portion 101c is configured to convert the commercial power of the commercial power supply 103 to a predetermined DC voltage, and output the DC voltage between the both ends of the smoothing capacitor 101b. The power conversion portion 101a is configured to convert the DC voltage of the capacitor 101b to a predetermined DC voltage, and supply the resultant DC voltage to the DC power supply 102 by outputting the resultant DC voltage to the DC system W101. In the case where the DC power supply 102 is constituted by a storage battery, the output of the power conversion portion 101a is used to charge the storage battery. Also, in the case where the DC power supply 102 is constituted by a solar cell, the output of the power conversion portion 101a is used for the purpose of snow removal by causing the solar cell to generate heat.

An auxiliary power supply 101e is connected, at an input thereof, to the AC system W102, and is configured to convert the voltage of the commercial power supply 103 to a DC voltage (auxiliary charge voltage), and apply the DC voltage to the capacitor 101b. The auxiliary power supply 101e is configured to operate before startup of the power conversion portion 101a and the power conversion portion 101c, and charge the capacitor 101b.

The capacitor 101b is charged to an auxiliary charge voltage by the auxiliary power supply 101e, before the interconnection relay 101d is turned on and the power conversion portion 101a and the power conversion portion 101c start up.

Accordingly, an inrush current that flows into the capacitor 101b at the startup of the power conversion portions 101a and 101c can be suppressed.

Here, assume that the power conditioner 101 converts the DC voltage of the DC power supply 102 to an AC voltage, and outputs the AC voltage to the AC system W102. In this case, if the auxiliary charge voltage is higher than the output voltage of the power conversion portion 101a, the output of the auxiliary power supply 101e is inputted to the power conversion portion 101c. Also, assume that the power conditioner 101 converts the voltage of the commercial power supply 103 to a DC voltage, and outputs the DC voltage to the DC system W101. In this case, if the auxiliary charge voltage is higher than the output voltage of the power conversion portion 101c, the output of the auxiliary power supply 101e is inputted to the power conversion portion 101a.

That is to say, because the auxiliary charge voltage continues to be converted to the output voltage of the power conditioner even after startup, the auxiliary power supply 101e may possibly be overloaded and cause problems.

The present invention has been made in view of the above-described problems, and an object of the present invention is to provide a power conditioner in which overloading of an auxiliary power supply that charges a smoothing capacitor before startup can be suppressed.

### SOLUTION TO PROBLEM

A power conditioner according to the present invention is a power conditioner that is to be provided between a DC system to which DC power is supplied from a DC power supply and an AC system to which commercial power is supplied from a commercial power supply. The power conditioner includes a first power conversion portion, a second power conversion portion, a smoothing capacitor, and an auxiliary power supply. The first power conversion portion is connected to the DC system, and the second power conversion portion is connected to the AC system. The smoothing capacitor is connected to an intermediate bus that connects the first power conversion portion and the second power conversion portion. The auxiliary power supply is configured to receive the commercial power and apply an auxiliary charge voltage to the capacitor. The first power conversion portion is configured to perform at least one-directional power conversion between the DC system and the capacitor. The second power conversion portion is configured to perform at least one-directional power conversion between the AC system and the capacitor. The auxiliary power supply is configured to apply the auxiliary charge voltage to the capacitor before startup of the first power conversion portion and the second power conversion portion. The auxiliary charge voltage is lower than the DC voltage that is applied to the capacitor by the first power conversion portion after startup or by the second power conversion portion after startup.

### ADVANTAGEOUS EFFECTS OF INVENTION

As described above, because an output of the auxiliary power supply does not flow into the first power conversion portion and the second power conversion portion after start up, the present invention has an effect that overloading of the auxiliary power supply that charges the smoothing capacitor before startup can be suppressed.

### BRIEF DESCRIPTION OF DRAWINGS

FIG. 1 is a block diagram illustrating a configuration of a power conditioner of an embodiment;
FIG. 2 is a circuit diagram illustrating a configuration of a power conversion portion of the power conditioner of the embodiment;
FIG. 3 is a block diagram illustrating an operation in a first mode of the power conditioner of the embodiment;
FIG. 4 is a block diagram illustrating an operation in a second mode of the power conditioner of the embodiment;
FIG. 5 is a graph illustrating a characteristic of an auxiliary charge voltage of the power conditioner of the embodiment;
FIG. 6 is a block diagram illustrating a configuration of the power conditioner in the case where a solar cell is used as a DC power supply instead of a storage battery; and
FIG. 7 is a block diagram illustrating a configuration of a conventional power conditioner.

### DESCRIPTION OF EMBODIMENTS

Hereinafter, an embodiment of the present invention will be described with reference to the drawings.

### Embodiment

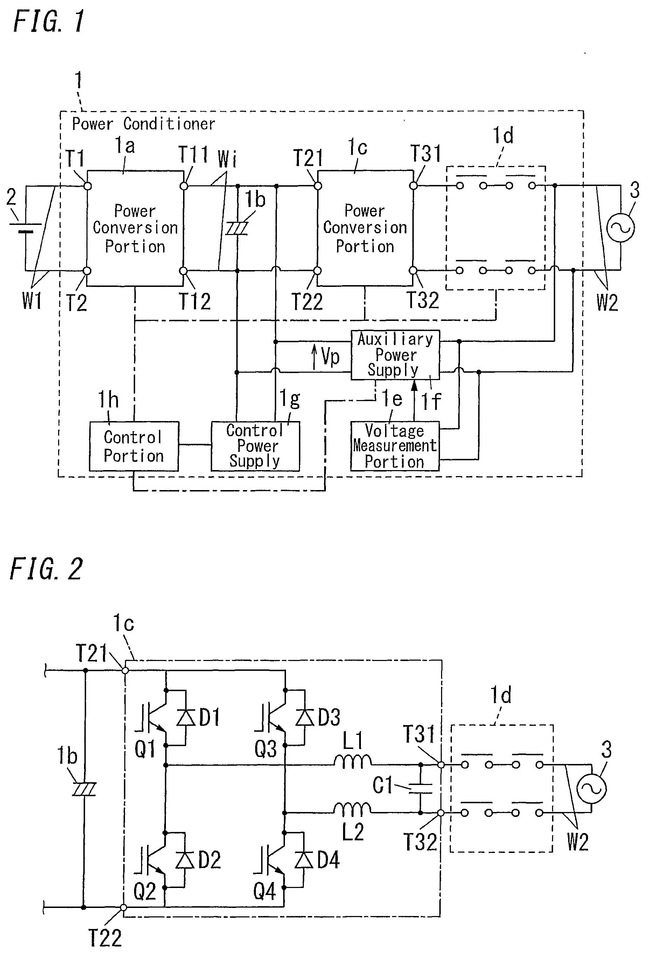

A configuration of a power conditioner 1 of the present embodiment is shown in FIG. 1. The power conditioner 1 is connected between a DC system W1 and an AC system W2 (commercial power system), and is configured to perform bidirectional power conversion involving DC to AC conversion and AC to DC conversion.

The power conditioner 1 includes a power conversion portion 1a (first power conversion portion), a smoothing capacitor 1b, a power conversion portion 1c (second power conversion portion), an interconnection relay 1d, a voltage measurement portion 1e, an auxiliary power supply If, a control power supply 1g, and a control portion 1h.

A storage battery 2 (DC power supply) is connected to the DC system W1, and the DC system W1 is connected to terminals T1 and T2 of the power conversion portion 1a. Terminals T11 and T12 of the power conversion portion 1a are connected to an intermediate bus Wi. A smoothing capacitor 1b is connected between wires of the intermediate bus Wi. Terminals T21 and T22 of the power conversion portion 1c are connected to the intermediate bus Wi. Furthermore, terminals T31 and T32 of the power conversion portion 1c are connected to the AC system W2 via the interconnection relay 1d. The AC system W2 is supplied with commercial power from the commercial power supply 3, and an unshown load is connected thereto.

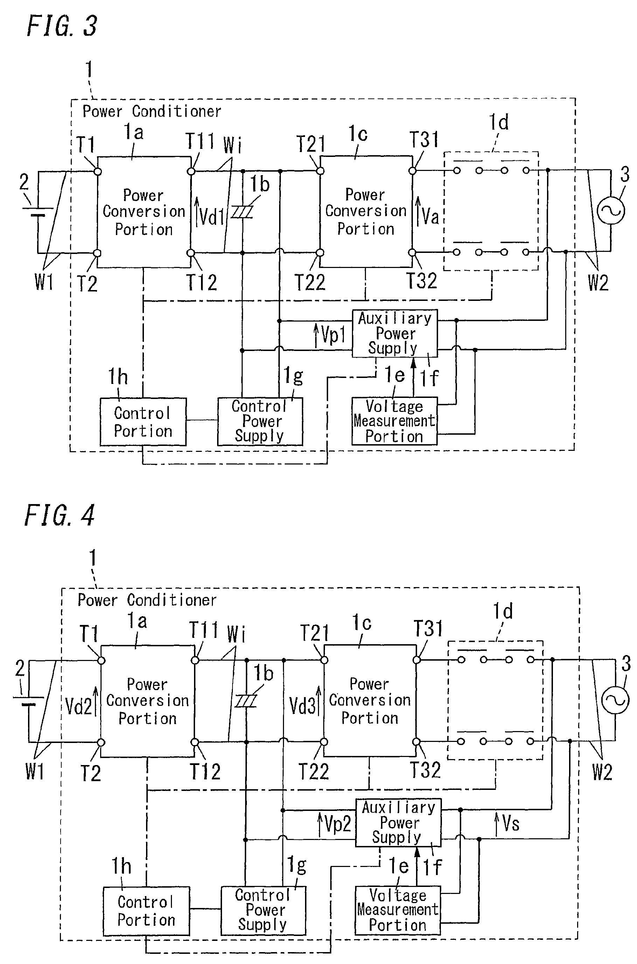

The power conversion portion 1a can perform bidirectional power conversion by switching between a first operation and a second operation. In the first operation of the power conversion portion 1a, the DC power (discharging power) of the storage battery 2 that is inputted to the terminals T1 and T2 is converted to a DC voltage Vd1 (first DC voltage, refer to FIG. 3), and the DC voltage Vd1 is outputted to the intermediate bus Wi from the terminals T11 and T12. In the second operation of the power conversion portion 1a, the voltage of the capacitor 1b that is inputted to the terminals T11 and T12 is converted to a DC voltage Vd2 (second DC voltage, refer to FIG. 4), the DC voltage Vd2 is outputted to the DC system W1 from the terminals T1 and T2, and the storage battery 2 is charged. Note that the power conversion portion 1a is constituted by a circuit such as a conventionally known chopper circuit that can perform bidirectional power conversion.

The power conversion portion 1c can perform bidirectional power conversion by switching between a third operation and a fourth operation. In the third operation of the power conversion portion 1c, the voltage of the capacitor 1b that is inputted to the terminals T21 and T22 is converted to an AC voltage Va (refer to FIG. 3), and the AC voltage Va is outputted to the AC system W2 from the terminals T31 and T32 via the interconnection relay 1d. In the fourth operation of the power conversion portion 1c, the commercial power of the AC system W2 that is inputted to the terminals T31 and T32 via the interconnection relay 1d is converted to a DC voltage Vd3 (third DC voltage, refer to FIG. 4), and the DC voltage Vd3 is outputted to the intermediate bus Wi from the terminals T21 and T22.

The circuit configuration of the power conversion portion 1c is shown in FIG. 2. The power conversion portion 1c includes four switching elements Q1 to Q4 that form a full bridge and are connected between the terminals T21 and T22. Diodes D1 to D4 are respectively connected to the switching elements Q1 to Q4 such that the diodes are reversely biased when receiving an input DC voltage (connected in inverse parallel). A series circuit of a reactor L1, a capacitor C1, and a reactor L2 is connected between a connection point of the switching elements Q1 and Q2 connected in series and a connection point of the switching elements Q3 and Q4 connected in series. Both ends of the capacitor C1 that is connected between the reactor L1 and the reactor L2 are respectively connected to the terminals T31 and T32.

The power conversion portion 1c, in the third operation, converts the voltage of the capacitor 1b to the AC voltage Va by turning on or off the switching elements Q1 and Q4 while turning off or on the switching elements Q2 and A3 alternatingly, and outputs the AC voltage Va from the terminals T31 and T32. Also, the power conversion portion 1c, in the fourth operation, converts the commercial power of the AC system W2 to the DC voltage Vd3 by performing full-wave rectification on the voltage of the commercial power supply 3 with the diodes D1 to D4, and outputs the DC voltage Vd3 from the terminals T21 and T22.

The control portion 1h controls operations of the power conversion portions 1a and 1c, the interconnection relay 1d, and the auxiliary power supply 1f. For example, the control portion 1h switches between a first mode and a second mode, in the first mode the power conversion portion 1a performing the first operation and the power conversion portion 1c performing the third operation, in the second mode the power conversion portion 1c performing the fourth operation and the power conversion portion 1a performing the second operation.

In the first mode, after the interconnection relay 1d is turned on, the power conversion portion 1a starts up in the first operation and the power conversion portion 1c starts up in the third operation. The power conversion portion 1a converts the DC power of the storage battery 2 to the DC voltage Vd1, and applies the DC voltage Vd1 to the capacitor 1b. The power conversion portion 1c converts the voltage of the capacitor 1b to the AC voltage Va, and outputs the AC voltage Va to the AC system W2 (refer to FIG. 3).

In the second mode, after the interconnection relay 1d is turned on, the power conversion portion 1c starts up in the fourth operation and the power conversion portion 1a starts up in the second operation. The power conversion portion 1c converts the commercial power of the AC system W2 to the DC voltage Vd3, and applies the DC voltage Vd3 to the capacitor 1b. The power conversion portion 1a converts the voltage of the capacitor 1b to the DC voltage Vd2, and outputs the DC voltage Vd2 to the DC system W1 (refer to FIG. 4).

The control power supply 1g generates a control voltage using the voltage of the capacitor 1b as an input. The control voltage is used as a driving power supply for the power conversion portions 1a and 1c and the control portion 1h.

The auxiliary power supply If generates an auxiliary charge voltage Vp (refer to FIG. 1) using the commercial power of the AC system W2 as an input, and applies the auxiliary charge voltage Vp to the capacitor 1b before the interconnection relay 1d is turned on and the power conversion portions 1a and 1c start up. Note that the auxiliary charge voltage Vp that is generated when the power conditioner 1 operates in the first mode is referred to as Vp1, and the auxiliary charge voltage Vp that is generated when the power conditioner 1 operates in the second mode is referred to as Vp2 (refer to FIGS. 3 and 4).

Next, the operation of the power conditioner 1 at startup will be described.

In the case where the power conditioner 1 operates in the first mode, the auxiliary power supply If applies the auxiliary charge voltage Vp1 to the capacitor 1b before the interconnection relay 1d is turned on (before startup of the power conversion portions 1a and 1c). After a predetermined period (sufficient period for the voltage of the capacitor 1b to reach the auxiliary charge voltage Vp1) has elapsed, the control portion 1h turns on the interconnection relay 1d, and causes the power conversion portions 1a and 1c to start the power conversion operation. Accordingly, in the case where the power conditioner 1 operates in the first mode, an inrush current that flows into the capacitor 1b from the storage battery 2 via the power conversion portion 1a and an inrush current that flows into the capacitor 1b from the commercial power supply 3 via the power conversion portion 1c can be suppressed. Here, the power conversion portion 1c includes a system interconnection function, and can supply AC electric power that is aligned to the commercial power of the commercial power supply 3 to the AC system W2.

The auxiliary power supply If is provided with a diode for backflow prevention (not shown) at an output, and the auxiliary charge voltage Vp1 that the auxiliary power supply If outputs is set to a voltage that is lower than the DC voltage Vd1 that the power conversion portion 1a outputs. Accordingly, in the power conditioner 1 after startup, the output of the auxiliary power supply If does not flow into the terminals T21 and T22 of the power conversion portion 1c, and the auxiliary power supply If can be prevented from being overloaded.

Also, as a result of the auxiliary charge voltage Vp1 being lower than the DC voltage Vd1, the control power supply 1g generates the control voltage using the output of the power conversion portion 1a. That is, the control power supply 1g can generate the control voltage without using the output of the auxiliary power supply If. Accordingly, the power conditioner 1 further suppresses the load on the auxiliary power supply If.

Also, in the first mode, in the case where the auxiliary charge voltage Vp1 is higher than the DC voltage Vd1, the control power supply 1g generates the control voltage using the output of the auxiliary power supply 1f, resulting in the control voltage being generated using the commercial power. However, because the auxiliary charge voltage Vp1 is lower than the DC voltage Vd1 in the embodiment, the control power supply 1g can generate the control voltage using only the discharge power of the storage battery 2 without using the commercial power. Accordingly, the power conditioner 1 does not needlessly consume the commercial power.

Next, in the case where the power conditioner 1 starts up in the second mode, the auxiliary power supply If applies the auxiliary charge voltage Vp2 to the capacitor 1b before the interconnection relay 1d is turned on (before startup of the power conversion portions 1a and 1c). After a predetermined period (sufficient period for the voltage of the capacitor 1b to reach the auxiliary charge voltage Vp2) has elapsed, the control portion 1h turns on the interconnection relay 1d, and causes the power conversion portions 1a and 1c to start the power conversion operation. Accordingly, in the case where the power conditioner 1 operates in the second mode, an inrush current that flows into the capacitor 1b from the storage battery 2 via the power conversion portion 1a and an inrush current that flows into the capacitor 1b from the commercial power supply 3 via the power conversion portion 1c can be suppressed.

The auxiliary power supply If is provided with the diode for backflow prevention (not shown) at the output, and the auxiliary charge voltage Vp2 that the auxiliary power supply If outputs is set to a voltage lower than the DC voltage Vd3 that the power conversion portion 1c outputs. Accordingly, in the power conditioner 1 after startup, the output of the auxiliary power supply 1f does not flow into the terminals T11 and T12 of the power conversion portion 1a, and the auxiliary power supply If is prevented from being overloaded.

Also, as a result of the auxiliary charge voltage Vp2 being set to be lower than the DC voltage Vd3, the control power supply 1g generates the control voltage using the output of the power conversion portion 1c. That is, the control power supply 1g can generate the control voltage without using the output of the auxiliary power supply If. Accordingly, the power conditioner 1 can further suppress the load on the auxiliary power supply 1f.

Note that the circuit configuration of the auxiliary power supply If is not specifically limited, as long as the auxiliary power supply If can output the auxiliary charge voltages Vp1 and Vp2 (including a case in which Vp1=Vp2). For example, the auxiliary power supply If may be constituted by a transformer having a predetermined turn ratio and a rectifier provided downstream of the transformer. Also, the auxiliary power supply If may be constituted by a switching circuit.

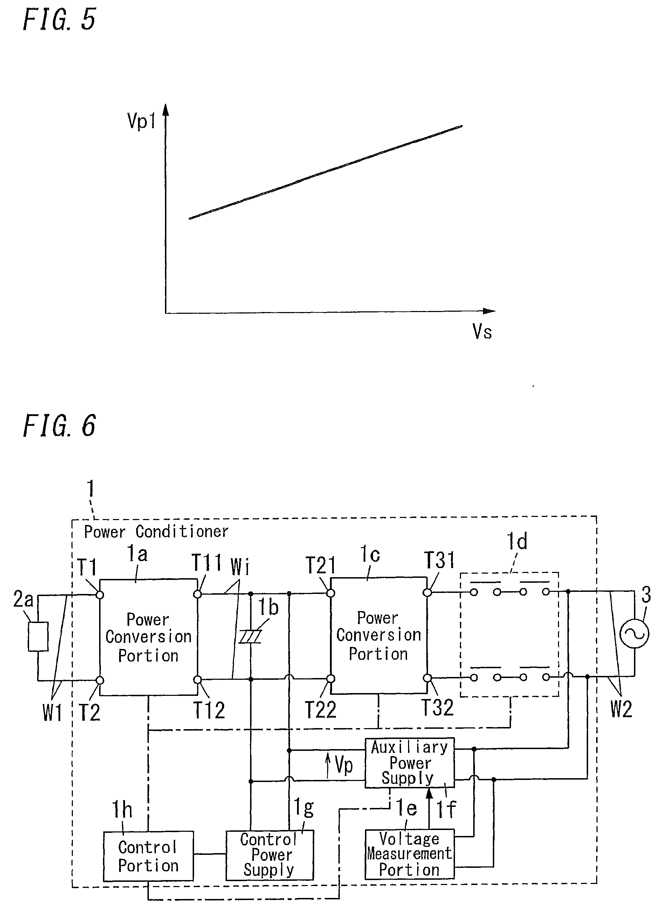

Also, the power conditioner 1 includes the voltage measurement portion 1e configured to measure the voltage of the AC system W2, and the auxiliary power supply If preferably increases the auxiliary charge voltage Vp1 as the voltage Vs of the AC system W2 that is measured by the voltage measurement portion 1e increases, as shown in FIG. 5. Note that the auxiliary power supply If may be configured to increase the auxiliary charge voltage Vp1 linearly with respect to the voltage Vs of the AC system W2, or may be configured to increase the auxiliary charge voltage Vp1 in a curved manner, logarithmically, or in a stepwise manner with respect to the voltage Vs.

The auxiliary charge voltage Vp1 is preferably higher than the peak (instantaneous peak voltage) of an instantaneous voltage value of the AC system W2. For example, the auxiliary power supply If adjusts the auxiliary charge voltage Vp1 to a voltage (1.1 times the instantaneous peak voltage of the AC system W2, for example) that is slightly higher than the instantaneous peak voltage of the AC system W2.

Accordingly, since the auxiliary charge voltage Vp1 is higher than the instantaneous peak voltage of the AC system W2 even when the voltage Vs of the AC system W2 fluctuates, the power conditioner 1 can further suppress the inrush current that flows into the capacitor 1b from the commercial power supply 3.

On the other hand, it is also thought that the inrush current that flows into the capacitor 1b from the commercial power supply 3 can be suppressed by estimating in advance the maximum value (maximum instantaneous peak voltage) of the instantaneous peak voltage of the AC system W2, and setting the auxiliary charge voltage Vp1 to be constantly higher than the estimated value of the maximum instantaneous peak voltage. However, in this case, the auxiliary charge voltage Vp1 needs to be constantly kept at a higher value, and a state may possibly occur in which the auxiliary charge voltage Vp1 is set to a value unnecessarily higher than the actual instantaneous peak voltage of the AC system W2. Accordingly, the voltage difference between the auxiliary charge voltage Vp1 and the voltage Vs of the AC system W2 increases.

In the case where the power conditioner 1 operates in the first mode based on the power conversion portion 1c shown in FIG. 2, because the voltage applied to the reactors L1 and L2 increases as the voltage difference between the auxiliary charge voltage Vp1 and the voltage Vs of the AC system W2 increases, the core loss at startup increases. Therefore, as a result of the auxiliary power supply If changing the auxiliary charge voltage Vp1 according to the voltage Vs of the AC system W2, as described above, the loss in the reactors L1 and L2 can be suppressed.

Also, a solar cell 2a may be used instead of the storage battery 2 as the DC power supply to be connected to the DC system W1 (refer to FIG. 6). In this case, the power conditioner 1, in the first mode, converts the generated power of the solar cell 2a into AC electric power, and outputs the AC electric power to the AC system W2. Also, the power conditioner 1, in the second mode, converts the commercial power into DC power, and outputs the DC power to the DC system W1, and the DC power is used for the purpose of snow removal or the like by causing the solar cell 2a to generate heat.

That is to say, in the power conditioner 1 of the present embodiment, the DC power supply is constituted by the storage battery 2 or the solar cell 2a. The power conversion portion 1a is configured to perform bidirectional power conversion by switching between the first operation and the second operation, in the first operation the power conversion portion 1a converting the DC power to the DC voltage Vd1 and applying the DC voltage Vd1 to the capacitor 1b, in the second operation the power conversion portion 1a converting the voltage of the capacitor 1b to the DC voltage Vd2 and outputting the DC voltage Vd2 to the DC system W1. Also, the power conversion portion 1c is configured to perform bidirectional power conversion by switching between the third operation and the fourth operation, in the third operation the power conversion portion 1c converting the voltage of the capacitor 1b to the AC voltage Va and outputting the AC voltage Va to the AC system W2, in the fourth operation the power conversion portion 1c converting the commercial power of the AC system W2 to the DC voltage Vd3 and applying the DC voltage Vd3 to the capacitor 1b. Furthermore, the power conditioner 1 is configured to be switchable between the first mode and the second mode, in the first mode the power conversion portion 1a performing the first operation and the power conversion portion 1c performing the third operation, in the second mode the power conversion portion 1c performing the fourth operation and the power conversion portion 1a performing the second operation. It is preferable that the auxiliary charge voltage Vp1 in the first mode is lower than the DC voltage Vd1, and the auxiliary charge voltage Vp2 in the second mode is lower than the DC voltage Vd3.

Also, the power conditioner 1 may include only the power conversion function of the first mode described above. In this case, the power conversion portion 1a converts the DC power to the DC voltage Vd1 and applies the DC voltage Vd1 to the capacitor 1b, and the power conversion portion 1c converts the voltage of the capacitor 1b to the AC voltage Va and outputs the AC voltage Va to the AC system W2. The auxiliary power supply If applies the auxiliary charge voltage Vp1 to the capacitor 1b before startup of the power conversion portion 1a and the power conversion portion 1c, and the auxiliary charge voltage Vp1 is preferably lower than the DC voltage Vd1.

As described above, the power conditioner 1 is provided between the DC system W1 to which the DC power is supplied from a DC power supply such as a storage battery or a distributed power supply and the AC system W2 to which the commercial power is supplied from the commercial power supply 3. The power conditioner 1 includes the power conversion portion 1a, the power conversion portion 1c, the smoothing capacitor 1b, and the auxiliary power supply If. The power conversion portion 1a is connected to the DC system W1, and the power conversion portion 1c is connected to the AC system W2. The smoothing capacitor 1b is connected to the intermediate bus Wi that connects the power conversion portion 1a and the power conversion portion 1c. The auxiliary power supply If receives the commercial power and applies the auxiliary charge voltage Vp1 to the capacitor 1b. The power conversion portion 1a is configured to perform at least one-directional power conversion between the DC system W1 and the capacitor 1b, and the power conversion portion 1c is configured to perform at least one-directional power conversion between the AC system W2 and the capacitor 1b. The auxiliary power supply If applies the auxiliary charge voltage Vp to the capacitor 1b before startup of the power conversion portion 1a and the power conversion portion 1c. The auxiliary charge voltage Vp is characterized as being lower than the DC voltage that is applied to the capacitor 1b by the power conversion portion 1a after startup or the power conversion portion 1c after startup.

Here, the power conversion portion 1a may be configured to convert the DC power to the DC voltage Vd1 and apply the DC voltage Vd1 to the capacitor 1b, the power conversion portion 1c may be configured to convert the voltage of the capacitor 1b to the AC voltage Va and output the AC voltage Va to the AC system W2, and the auxiliary charge voltage Vp1 may be a voltage that is lower than the DC voltage Vd1.

Here, the DC power supply is constituted by the storage battery 2 or the solar cell 2a. The power conversion portion 1a is configured to perform bidirectional power conversion by switching between the first operation and the second operation, in the first operation the power conversion portion 1a converting the DC power to the DC voltage Vd1 and applying the DC voltage Vd1 to the capacitor 1b, in the second operation the power conversion portion 1a converting the voltage of the capacitor 1b to the DC voltage Vd2 and outputting the DC voltage Vd2 to the DC system W1. The power conversion portion 1c is configured to perform bidirectional power conversion by switching between the third operation and the fourth operation, in the third operation the power conversion portion 1c converting the voltage of the capacitor 1b to the AC voltage Va and outputting the AC voltage Va to the AC system W2, in the fourth operation the power conversion portion 1c converting the commercial power of the AC system W2 to the DC voltage Vd3 and applying the DC voltage Vd3 to the capacitor 1b. The power conditioner 1 is configured to be switchable between the first mode and the second mode, in the first mode the power conversion portion 1a performing the first operation and the power conversion portion 1c performing the third operation, in the second mode the power conversion portion 1c performing the fourth operation and the power conversion portion 1a performing the second operation. Here, the auxiliary charge voltage Vp1 in the first mode may be a voltage that is lower than the DC voltage Vd1, and the auxiliary charge voltage Vp2 in the second mode may be a voltage that is lower than the DC voltage Vd3.

Here, the power conditioner 1 may include the voltage measurement portion 1e configured to measure the voltage of the AC system W2, and the auxiliary power supply 1f may increase the auxiliary charge voltage Vp1 as the voltage Vs of the AC system W2 measured by the voltage measurement portion 1e increases.

Here, the power conditioner 1 may include the voltage measurement portion 1e configured to measure the voltage of the AC system W2, and the auxiliary power supply If may increase the auxiliary charge voltage Vp1 in the first mode as the voltage Vs of the AC system W2 measured by the voltage measurement portion 1e increases.

Here, the auxiliary charge voltage Vp1 may be higher than the peak of the instantaneous voltage value of the AC system W2.

Note that the embodiment described above is an example of the present invention. The present invention is not limited to the embodiment described above, and it should be obvious that, in addition to the above embodiment, various modifications can be made according to the design or the like, as long as they do not depart from the technical concept of the present invention.

## Claims

1. A power conditioner that is to be provided between a DC system to which DC power is supplied from a DC power supply and an AC system to which commercial power is supplied from a commercial power supply, the power conditioner comprising:
a first power conversion portion to be connected to the DC system;
a second power conversion portion to be connected to the AC system;
a smoothing capacitor connected to an intermediate bus that connects the first power conversion portion and the second power conversion portion; and
an auxiliary power supply configured to receive the commercial power and apply an auxiliary charge voltage to the capacitor,
the first power conversion portion being configured to perform at least one-directional power conversion between the DC system and the capacitor,
the second power conversion portion being configured to perform at least one-directional power conversion between the AC system and the capacitor,
the auxiliary power supply being configured to apply the auxiliary charge voltage to the capacitor before startup of the first power conversion portion and the second power conversion portion,
the auxiliary charge voltage being lower than a DC voltage that is applied to the capacitor by the first power conversion portion after startup or by the second power conversion portion after startup.

2. The power conditioner according to claim 1,
wherein the first power conversion portion is configured to convert the DC power to a first DC voltage and apply the first DC voltage to the capacitor,
wherein the second power conversion portion is configured to convert a voltage of the capacitor to an AC voltage and output the AC voltage to the AC system, and
wherein the auxiliary charge voltage is lower than the first DC voltage.

3. The power conditioner according to claim 1,
wherein the DC power supply is constituted by a storage battery or a solar cell,
wherein the first power conversion portion is configured to perform bidirectional power conversion by switching between a first operation and a second operation, in the first operation the first power conversion portion converting the DC power to a first DC voltage and applying the first DC voltage to the capacitor, in the second operation the first power conversion portion converting a voltage of the capacitor to a second DC voltage and outputting the second DC voltage to the DC system,
wherein the second power conversion portion is configured to perform bidirectional power conversion by switching between a third operation and a fourth operation, in the third operation the second power conversion portion converting a voltage of the capacitor to an AC voltage and outputting the AC voltage to the AC system, in the fourth operation the second power conversion portion converting the commercial power of the AC system to a third DC voltage and applying the third DC voltage to the capacitor,
wherein the power conditioner is configured to be switchable between a first mode and a second mode, in the first mode the first power conversion portion performing the first operation and the second power conversion portion performing the third operation, in the second mode the second power conversion portion performing the fourth operation and the first power conversion portion performing the second operation, and
wherein the auxiliary charge voltage in the first mode is lower than the first DC voltage, and the auxiliary charge voltage in the second mode is lower than the third DC voltage.

4. The power conditioner according to claim 2, further comprising a voltage measurement portion configured to measure a voltage of the AC system,
wherein the auxiliary power supply is configured to increase the auxiliary charge voltage as the voltage of the AC system measured by the voltage measurement portion increases.

5. The power conditioner according to claim 3, further comprising a voltage measurement portion configured to measure a voltage of the AC system,
wherein the auxiliary power supply is configured to increase the auxiliary charge voltage in the first mode as the voltage of the AC system measured by the voltage measurement portion increases.

6. The power conditioner according to claim 4 or 5, wherein the auxiliary charge voltage is higher than a peak of an instantaneous voltage value of the AC system.
